# EUROPÄISCHE PATENTSCHRIFT

(11) **EP 1 271 417 B1**
(45) Veröffentlichungstag und Bekanntmachung des Hinweises auf die Patenterteilung: **30.05.2012**
(21) Anmeldenummer: 02011288.4
(22) Anmeldetag: 22.05.2002
(51) Int. Cl.: G07B 15/00, G06K 7/00, H01Q 1/08, H01Q 1/32

(54) **Gehäuse für ein in einem Fahrzeug verwendbares Gerät zur automatischen Ermittlung von Strassenbenutzungsgebühren**
Housing for an apparatus used in a vehicle for an automatic road use charge collection
Boîtier employé à bord d'un véhicle pour acquitter automatiquement les droits d'un péage routier

(30) Priorität: 25.05.2001 DE 20108778 U
(43) Veröffentlichungstag der Anmeldung: 02.01.2003
(73) Patentinhaber: Continental Automotive GmbH, 30165 Hannover (DE)
(72) Erfinder: Funk, Stefan, 78050 Villingen-Schwenningen (DE); Kraus, Ulrich, 78056 Villingen-Schwenningen (DE); Umfahrer, Klaus, 70957 Stuttgart (DE)

(56) Entgegenhaltungen:
- EP-A- 0 610 025
- EP-A- 0 790 569
- FR-A- 2 707 407
- FR-A- 2 783 777
- US-B1- 6 175 791

## Beschreibung

Die Erfindung betrifft ein in einem Fahrzeug verwendbares Gerät zur automatischen Ermittlung von Straßenbenutzungsgebühren mit wenigstens einem Chipkartenaggregat, einem GPS-Empfänger, einem eine digitale Straßenkarte sowie Straßenabschnitten zugeordnete Tarifdaten enthaltenden Speicher, einem Rechner und einem der Kommunikation mit im wesentlichen ortsfesten Baken dienenden DSRC-Modul.

Bei der Ermittlung von Straßenbenutzungsgebühren arbeitet das betreffende Gerät mit einer Chipkarte zusammen, in welcher Benutzer- und Fahrzeugdaten sowie Gebührenguthaben gespeichert sind. Die Berechnung der Benutzungsgebühren geht von einer Fahrstreckenidentifikation aus, bei der nach jeder mittels des in dem Gerät angeordneten GPS-Empfängers sekundenweise ermittelten Positionsbestimmung ein Vergleich mit den im Gerät gespeicherten gebührenpflichtigen Abschnitten, beispielsweise der Autobahnen sowie den jeweils festgesetzten Gebührentarifen vorgenommen wird.

Die für einen bestimmten Autobahnabschnitt errechnete Benutzungsgebühr übermittelt das Gerät zusammen mit zusätzlichen Daten an die Chipkarte, in welcher die Benutzungsgebühr vom Gebührenguthaben abgebucht, ein Berechtigungsnachweis zur Benutzung des betreffenden Autobahnabschnitts erstellt und dem Gerät mitgeteilt wird. Unabhängig davon kann vorgesehen sein, dass die jeweiligen Benutzungsgebühren und andere Daten der Chipkarte vorzugsweise über ein Mobilfunknetz einem Zentralsystem mitgeteilt werden, welches andererseits die Aktualisierung der für die Gebührenerhebung erforderlichen Daten vornimmt.

Der Berechtigungsnachweis wird automatisch, das heißt während der Fahrt dann überprüft, wenn das betreffende Fahrzeug eine für diesen Zweck im jeweiligen Autobahnabschnitt installierte Bake passiert. Dabei erfolgt die Kommunikation zwischen der Bake und dem Gerät über eine geeignete Mikrowellenverbindung, welche zur Reduzierung von Leitungsverlusten ein dem Gerät unmittelbar zugeordnetes Modul für den Empfang und die Modulation der von einer Bake gesendeten Trägerfrequenz erforderlich macht. Das diesem Zwecke dienende DSRC-Modul weist eine flache, im wesentlichen von einer u. a. auch die Sende- und Empfangsantennen tragenden Leiterplatte bestimmte Bauform auf. Das heißt, der Einbau des Gerätes im Fahrzeug hat derart zu erfolgen, dass die Sende- und Empfangsantennen im wesentlichen in Abstrahlrichtung der im allgemeinen über der Fahrbahn fest installierten Baken bzw. die die Sendeund Empfangsantennen tragende Leiterplatte quer zur Abstrahlrichtung der Baken ausgerichtet sind. Andererseits besteht die Forderung, dass das Gerät im Sichtbereich des Fahrers anzuordnen ist, damit z. B. Gebührenguthaben und Statusinformationen gut abgelesen werden können und ein problemloses Handhaben der Chipkarte gegeben ist. Eine weitere, wesentliche Forderung besteht außerdem darin, dass das Gerät das Sichtfeld des Fahrers so wenig wie möglich einschränkt. Auf der anderen Seite sind, weil nicht in allen Staaten Straßenbenutzungsgebühren erhoben werden, in den Fahrzeugen in der Regel keine Vorkehrungen getroffen, um einen in dieser Hinsicht optimierten Einbau eines Gerätes, beispielsweise einen in die Armaturentafel vorzugsweise oberflächenbündig versenkten Einbau, derart vornehmen zu können, dass lediglich das DSRC-Modul für die durch die Windschutzscheibe hindurch erfolgende Kommunikation mit den Baken über die Armaturentafeloberfläche herausragt. Das heißt, das Gerät muss auf der Armaturentafel, und zwar wegen der von Fahrzeugtyp zu Fahrzeugtyp erheblich unterschiedlichen Topographie der Armaturentafeln in geeigneter Weise ausrichtbar befestigt werden können.

Die Patentanmeldung FR2783777 offenbart ein Gehäuse, das Gerätschaften aufnehmen kann, um Informationen für den Fahrer darzustellen. Das Gehäuse kann unterschiedliche Module aufnehmen. Eine Anzeige und ein Rückspiegel werden nebeneinander montiert und zentral angeordnet.

Die der Erfindung zugrunde liegende Aufgabe bestand somit darin, eine Gerätearchitektur und somit ein Gehäuse zu schaffen, welches den

unterschiedlichen und zum Teil sich widersprechenden Betriebs- und Einbaubedingungen gerecht wird, fahrzeugtauglich ist und sich für eine Großserienherstellung eignet.

Die Lösung dieser Aufgabe sieht vor, dass das Gehäuse aus zwei Teilgehäusen besteht, wobei ein dem DSRC-Modul zugeordnetes Antennengehäuse gelenkig mit einem die übrigen Funktionsbaugruppen tragenden Grundgehäuse verbunden ist derart, dass die Schwenkachse in der Führungsebene des Chipkartenaggregates oder mit nur geringem Abstand parallel zu dieser angeordnet ist, dass dem Grundgehäuse Mittel zur Befestigung des Gerätes am Einbauort zugeordnet sind, wobei das Gerät für die Montage auf einem Armaturenbrett geeignete Teilgehäuse aufweist und dass Mittel vorgesehen sind, welche ein gegenseitiges Arretieren von Grundgehäuse und Antennengehäuse in einer den Einbaugegebenheiten entsprechenden Winkelstellung gestatten.

Ein bevorzugtes Ausführungsbeispiel ist dadurch gekennzeichnet, dass Grundgehäuse und Antennengehäuse jeweils wenigstens aus zwei Gehäusebauteilen zusammengefügt sind und dass in den Seitenwänden der Gehäusebauteile des Grundgehäuses einander zugeordnete Lagerschalen und an den Seitenwänden der Gehäusebauteile des Antennengehäuses sich zu jeweils einem Achselement ergänzende Achshälften angeformt sind.

Weitere vorteilhafte Ausbildungen der erfindungsgemäßen Lösung beschreiben die hier nicht zitierten Unteransprüche.

Abgesehen von der für eine optimale Kommunikation mit den Baken notwendigen Anordnung des DSRC-Moduls unmittelbar hinter der Windschutzscheibe eines Fahrzeuges, bietet die Erfindung den Vorteil, dass das Gerät, zumal wenn ein relativ niedrig bauendes Display verwendet wird, oder auf ein Display verzichtet werden kann, ein insbesondere für die Montage auf einem Armaturenbrett geeignetes Gehäuse aufweist, welches einerseits benutzerfreundlichen Betätigungs- und Ableseerfordernissen gerecht wird andererseits eine das

Gesichtsfeld des Fahrers praktisch nicht einschränkende, relativ niedrige Bauhöhe bietet. Dabei ist es denkbar das Chipkartenaggregat derart anzuordnen, dass die Chipkarte alternativ zum bevorzugten Ausführungsbeispiel in Richtung der Schwenkachse der beiden Teilgehäuse in das Gerät eingebbar ist. Außerdem ist es denkbar die Schwenkachse des DSRC-Moduls heb- und senkbar anzuordnen, um, wo es die Einbauverhältnisse gestatten, beim Einbau des Gerätes eine möglichst geringe Bauhöhe und somit eine Reduzierung der durch das DSRC-Modul zwangsweise verursachten, an sich geringfügigen Sichtfeldeinschränkung schaffen zu können. Eine diesbezügliche Lösung wäre es, eine zweite Schwenkachse vorzusehen, das heißt, die Schwenkachse des DSRC-Moduls an am Grundgehäuse schwenkbar gelagerten Koppeln auszubilden.

Von Vorteil ist ferner, dass sämtliche Bauteile des Gehäuses spritzgießtechnisch herstellbar sind und Rastverbindungsmittel für das Verbinden der Gehäusebauteile unmittelbar angeformt werden können. Zweckmäßig ist aber auch ein Verbinden der Gehäusebauteile durch Kleben womit einerseits höhere Dichtheit und bessere elektromagnetische Schirmung erzielt werden andererseits ein mögliches Auseinanderklaffen der Gehäusebauteile durch unterschiedliches Verziehen aufgrund der hinter der Windschutzscheibe eines Kraftfahrzeuges herrschenden erheblichen Temperaturunterschiede verhindert wird. In vorteilhafter Weise erfolgt auch die Bildung der Schwenkachse sowie die vorgesehene axiale Sicherung durch unmittelbares Anformen an die betreffenden Gehäusebauteile wodurch ein Minimum an Bauteilen erzielt aber auch eine absolut sichere Verbindung der beiden Teilgehäuse nach dem Zusammenbau geschaffen wird. Mit anderen Worten, mit den an dem als Baugruppe vorfertigbaren Teilgehäuse des DSRC-Moduls angeformten Bunden wird, ohne zusätzliche Bauteile verwenden zu müssen, ein absichtliches oder unabsichtliches Außereingriffbringen der gelenkigen Verbindung der Teilgehäuse, beispielsweise durch Spreizen der Lagerschenkel des einen Teilgehäuses, wirksam verhindert. Erwähnenswert ist außerdem, dass die Bauform der
Schwenkachse es auf einfache Weise ermöglicht, die Leitungen für die Spannungsversorgung und die Datenübertragung zwischen dem DSRC-Modul und dem anderen Geräteteil zugriffssicher verlegen zu können indem die Leitungen durch ein als Hohlachse ausgebildetes Achselement geführt werden. Weitere vorteilhafte Ausgestaltungen der Erfindung gehen aus der folgenden Zeichnungsbeschreibung hervor.

Von den Zeichnungen eines Ausführungsbeispiels zeigen:
Figur 1 eine perspektivische Darstellung eines Gerätes zur Ermittlung von Straßenbenutzungsgebühren mit einem erfindungsgemäßen Gehäuse,
Figur 2 eine perspektivische Darstellung des DSRC-Moduls,
Figur 3 eine Darstellung des unbestückten Bodenteils des Grundgehäuses mit einer Zuordnung des DSRC-Moduls,
Figur 4 eine Montagefolge vormontierter Baugruppen und Gehäusebauteile.

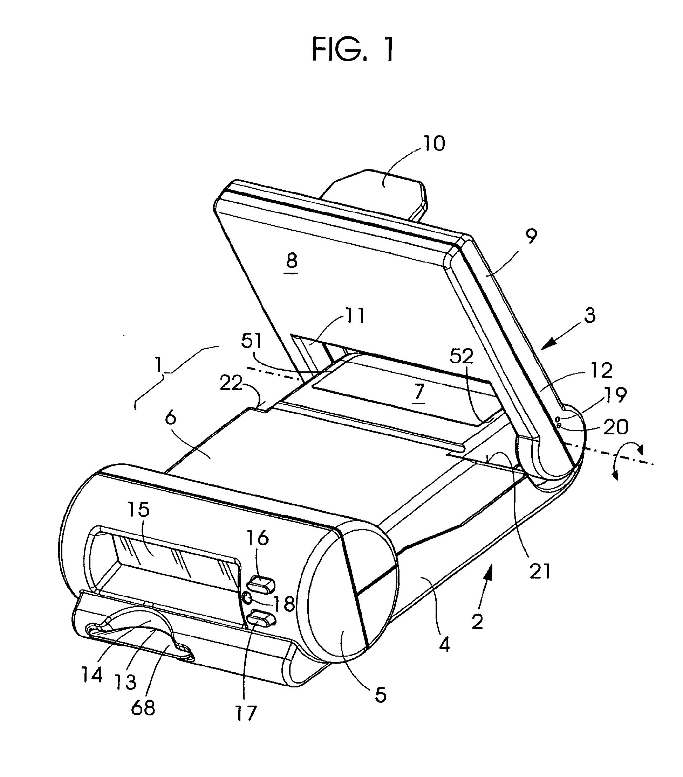

In der Figur 1, die das vollständig montierte Gerät zur automatischen Ermittlung von Straßenbenutzungsgebühren zeigt, ist das Gehäuse des Gerätes mit 1 bezeichnet. Das Gehäuse 1 besteht aus zwei gelenkig miteinander verbundenen Teilgehäusen, einem Grundgehäuse 2 und einem Antennengehäuse 3. Das Grundgehäuse 2, in welchem im wesentlichen eine den verschiedenen elektronischen Funktionsbaugruppen zugeordnete Leiterplatte, eine mit der Leiterplatte kontaktierte Displaybaugruppe und ein Chipkartenaggregat angeordnet sind, ist aus einem Bodenteil 4, einer Frontblende 5, einem Deckelteil 6 und einer Abdeckung 7 zusammengefügt. Das Antennengehäuse 3, welches das mit den den gebührenpflichtigen Straßenabschnitten zugeordneten Baken korrespondierende, plattenförmige DSRC-Modul beinhaltet, ist aus zwei im wesentlichen gleichen Gehäusebauteilen 8 und 9, die vorzugsweise miteinander verklebt sind, zusammengefügt. An dem einen Gehäusebauteil 9 ist ein nicht
zwingend erforderlicher, aber zweckmäßiger zungenförmiger Anschlag 10 ausgebildet, mit welchem bei der Montage des Gehäuses 1 in einem Fahrzeug ein großflächiges Anliegen des Antennengehäuses 3 an der Windschutzscheibe und somit eine nicht ausreichende Belüftung der Windschutzscheibe im Bereich des Antennengehäuses 3 vermeidbar ist. Ferner ist die Länge von Lagerschenkeln 11 und 12 des Antennengehäuses 3 derart gewählt, dass das Antennengehäuse 3 und das Grundgehäuse 2 unter einem relativ spitzen Winkel zueinander festlegbar sind.

Um eine möglichst geringe Bauhöhe des Grundgehäuses 2 zu erzielen, ist es, wie die Figur 1 zeigt, erforderlich, die Schwenkachse des Antennengehäuses 3 im wesentlichen in die Führungsebene des Chipkartenaggregates, das heißt in die Ebene, in der eine Chipkarte vorgesteckt oder eingezogen wird, zu legen. In Figur 1 ist die dem führenden Chipkartenschacht zugeordnete Einstecköffnung mit 13 bezeichnet; eine Freisparung 14 dient als Greifmulde. Bei sonst gleichem Gerätekonzept und im wesentlichen gleichliegender oder paralleler Führungsebene ist es auch denkbar, das Chipkartenaggregat derart anzuordnen, dass die verwendete Chipkarte von der Seite in das Gerät eingeführt werden kann.

Das als Ausführungsbeispiel gewählte Gerätekonzept umfasst ein Display, welches durch ein Fenster 15 in der Frontblende 5 beobachtbar ist und dessen Anzeigen durch Tasten 16 und 17 anwähl- und abfragbar sind. Ein ebenfalls in der Frontblende 5 angeordnetes Leuchtelement 18 dient der Anzeige der Betriebsbereitschaft.

Bei einem Verzicht auf wörtliche und andere Informationen, die nur mit einem Display realisierbar sind, könnte bei sonst gleichem Baukonzept die Bauhöhe des Grundgehäuses 2 weiter verringert werden, so dass der auf einer Armaturentafel zu befestigende Teil des Gerätes gegenüber dem in der ausgerichteten Position befindlichen Antennengehäuse 3 nur noch unwesentlich in

Erscheinung tritt und somit eine Einengung bzw. Störung des Sichtfeldes des Fahrers zumindest durch das Grundgehäuse 2 nicht mehr gegeben ist. In diesem Falle lassen sich wesentliche Informationen mittels einzelner, in einer Reihe parallel zur Führungsebene der Chipkarten angeordneter Leuchtanzeigeelemente anzeigen.

Die Abdeckung 7 schließt einen Anschlußbereich des Gerätes, in welchem Steckersockel für die Leitungen des DSRC-Moduls und die Spannungsversorgung des Gerätes, solche für den GPS-Empfang und die GSM-Kommunikation sowie für Diagnosestecker zugänglich sind. Mit 19 und 20 bezeichnete Durchgangsbohrungen dienen dem Arretieren des Antennengehäuses beim Einbau des Gerätes in einem Fahrzeug, indem das Antennengehäuse 3 in einer im folgenden noch näher zu beschreibender Weise vorzugsweise doppelseitig verstiftet wird. Am Deckelteil 6 des Grundgehäuses 2 ausgebildete Rampen 21 und 22 stellen lediglich Freischnitte dar; sie können aber auch dem Antennengehäuse 3 als Schwenkbegrenzung dienen, wobei die Lagerschenkel 11, 12 an den Rampen 21 und 22 zu Anlage kommen, was beispielsweise im Versandzustand des fertig montierten Gerätes der Fall sein könnte.

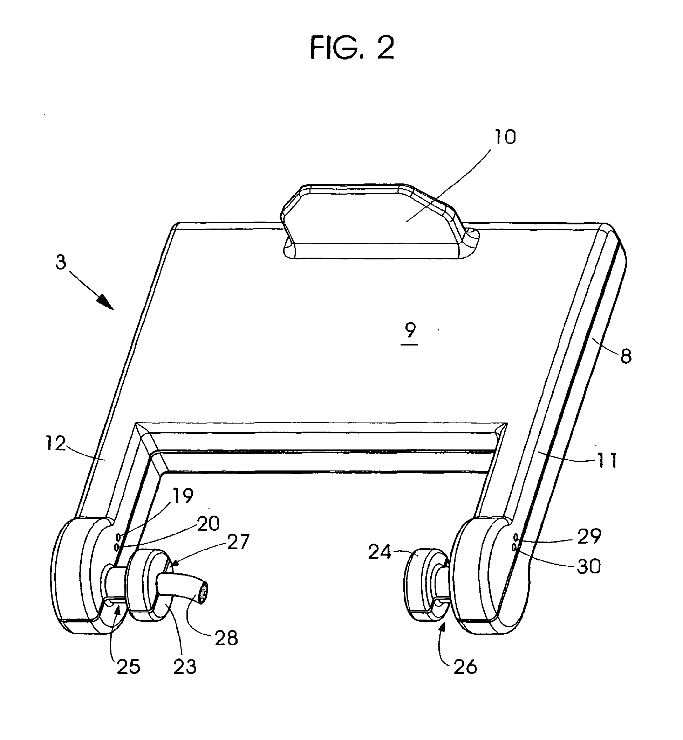

Wie aus der Figur 2 ersichtlich ist, sind an jedem Gehäusebauteil 8, 9 des Antennengehäuses 3 im einzelnen nicht bezeichnete Achshälften unmittelbar angeformt. Außerdem sind an den Achshälften ebenfalls nicht bezeichnete Halbscheiben ausgebildet derart, dass beim Zusammenfügen der Gehäusebauteile 8, 9 an den Lagerschenkeln 11, 12 mit Bunden 23 und 24 versehene Achselemente 25 und 26 entstehen. Dabei sind die Achselemente 25, 26 und selbstverständlich auch die Lagerschenkel 11, 12 aus spritzgießtechnischen Gründen dünnwandig ausgebildet, so dass, wenn eines der Achselemente 25 bzw. 26 stirnseitig mit einer Öffnung 27 versehen wird, für den Betrieb des DSRC-Moduls erforderliche und, was der Einfachheit halber nicht dargestellt ist, mit einem Stecker abgeschlossene Leitungen 28 durch die bestehenden Hohlräume herausgeführt werden können, und zwar ohne dass für das Verschwenken des

Antennengehäuses 3 eine ausreichende Leitungsreserve zu berücksichtigen ist. Mit 29 und 30 sind den Durchgangsbohrungen 19, 20 entsprechende Durchgangsbohrungen im Lagerschenkel 11 bezeichnet.

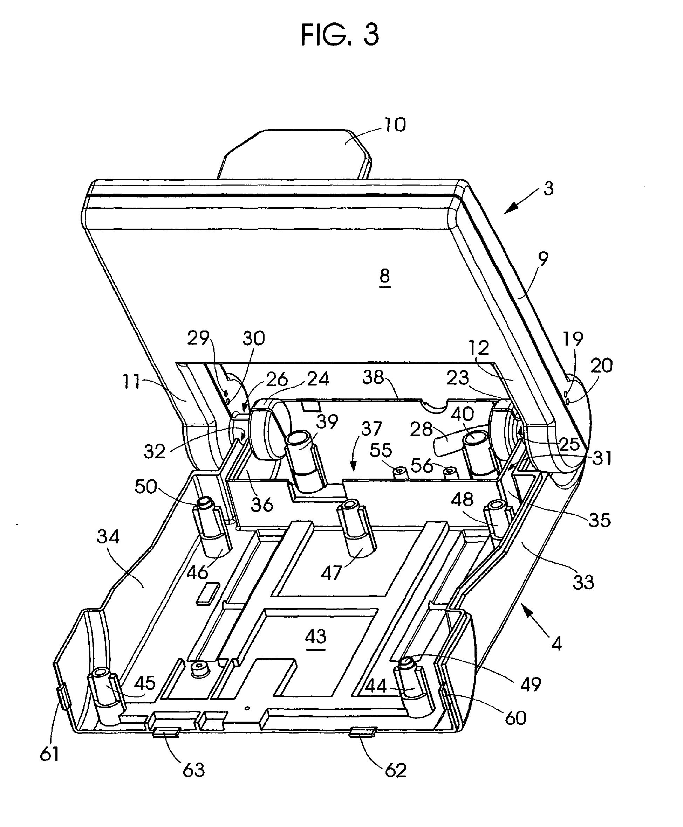

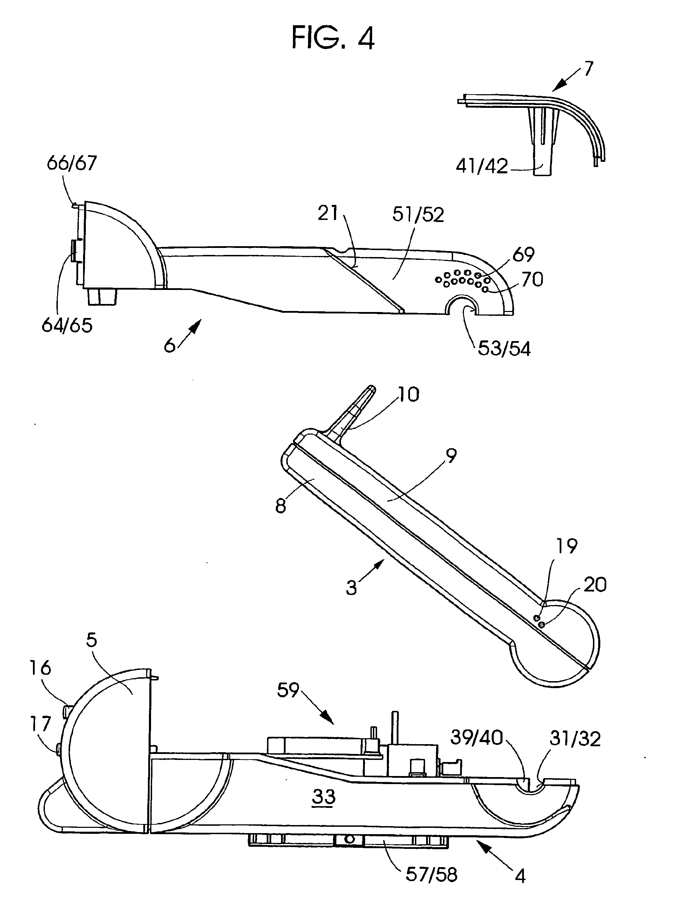

Die mit der Figur 3 dargestellte Studie einer Zuordnung des Antennengehäuses 3 zu dem unbestückten Bodenteil 4 des Grundgehäuses 2 zeigt, dass die Achselemente 25, 26 jeweils zweistellig gelagert sind. Das heißt, die jeweilige im Bodenteil 4 ausgebildete Lageschale 31 bzw. 32 ist einerseits in einer Seitenwand 33 bzw. 34 des Bodenteils 4 andererseits in einer Seitenwand 35 bzw. 36 eines den bereits erwähnten Anschlußbereich des Gerätes abtrennenden Rahmens 37, der durch entsprechende Wandelemente im Deckelteil 6 ergänzt und durch die Abdeckung 7 nach oben abgeschlossen wird, ausgeformt. Letztere wird mittels von der Unterseite des Bodenteils 4 eingeführter, nicht dargestellter Schrauben befestigt und stützt sich dabei einerseits auf dem Deckelteil 6 andererseits auf dem rückseitigen Rand 38 des Bodenteils 4 ab. Mit 39 und 40 sind den Schrauben zu Befestigung der Abdeckung 7 zugeordnete Führungshülsen bezeichnet. 41/42 (Figur 4) stellen die zugehörigen, an der Abdeckung 7 ausgeformten Gewindebolzen dar. In dem Bodenteil 4 ist ferner das Chipkartenaggregat sowie eine die elektronischen Bauteile und Funktionsgruppen tragende Leiterplatte befestigt, wobei das Chipkartenaggregat unmittelbar auf am Boden 43 des Bodenteils 4 ausgebildeten, nicht näher bezeichneten Rippen aufliegt und befestigt ist. Demgegenüber sind der Leiterplatte mit Durchgangsbohrungen versehene Stehbolzen 44, 45, 46, 47 und 48 zugeordnet, von denen zwei Ausrichtansätze 49 und 50 tragen. Wenigstens einer der Stehbolzen 44, 45, 46, 47 und 48 dient der Befestigung der Leiterplatte, die übrigen sind für Durchgangsschrauben zur Verbindung des Deckelteils 6 mit dem Bodenteil 4 vorgesehen, wobei im Deckelteil 6 geeignete Gewindezapfen ausgebildet sind. Beim Verschrauben des Deckelteils 6 mit dem Bodenteil 4 wird der Rahmen 37 zu einer mittels der Abdeckung 7 schließbaren, den erwähnten Anschlußbereich bildenden Kammer ergänzt in der lediglich noch die für die Steckerverbindungen erforderlichen Öffnungen freigespart sind. Die

Seitenwände der Kammer werden von doppelwandig ausgebildeten Lagerarmen 51/52 des Deckelteils 6 gebildet.

An den Lagerarmen 51/52 sind die Lagerschalen 31, 32 zu Lagerungen für die Achselemente 25, 26 ergänzende Lagerschalen 53/54 ausgeformt. Ferner sind in den Lagerarmen 51/52 den Durchgangsbohrungen 19, 20 und 29, 30 entsprechende, konzentrisch zur Schwenkachse ausgebildete Lochreihen 69 und 70 vorgesehen, die in Verbindung mit den Durchgangsbohrungen 19, 20 und 29, 30 ein ausreichend gutes Einstellen auf gegebene Einbausituationen und ein sicheres Arretieren des Antennengehäuses 3 durch Verstiften ermöglichen. In diesem Zusammenhang ist es auch denkbar zwischen dem Grundgehäuse 2 und dem Antennengehäuse 3 eine als Ausrichthilfe dienende Rastverzahnung vorzusehen. Der Vollständigkeit halber sei noch erwähnt, dass mit 55 und 56 Gewindebolzen zum Anbringen einer Zugentlastung für die einzuführenden Spannungsversorgungs- und Antennenkabel ausgebildet sind. Außerdem sind an der Unterseite des Bodenteils 4 Führungsschienen 57/58 zur Befestigung des Gerätes mittels eines geeigneten Halters vorgesehen.

Wie aus der die Montagefolge des Gerätes darstellenden Figur 4 hervorgeht wird, nachdem das Chipkartenaggregat und die die elektronischen Funktionsgruppen 59 tragende Leiterplatte montiert sind, die Frontblende 5, in der die mit der Leiterplatte zu kontaktierende Displaybaugruppe angeordnet ist, an dem Bodenteil 4 befestigt. Hierzu dienen bei dem dargestellten Ausführungsbeispiel Rastverbindungen, von denen die jeweiligen Rasthaken am Bodenteil 4 angeformt und mit 60, 61, 62 und 63 bezeichnet sind. Danach wird das Antennengehäuse 3 in die Lagerschalen 31, 32 eingelegt und das Deckelteil 6 aufgesetzt, wobei die Verbindung von Deckelteil 6 und Frontblende 5 ebenfalls mittels Rastverbindungen erfolgt. Mit 64/65 und 66/67 sind am Deckelteil 6 in gleicher Weise wie am Bodenteil 4 ausgebildete Rasthakenpaare bezeichnet. Nachfolgend werden Bodenteil 4 und Deckelteil 6 miteinander verschraubt und gegebenenfalls eine Schraubverbindung plombiert. Die Abdeckung 7 kann dem Gerät bis zu dessen Einbau in einem Kraftfahrzeug als loses Teil beigefügt
oder provisorisch befestigt werden. Eine in Figur 1 dargestellte Chipkarte 68 dient lediglich der Demonstration der Lage der Chipkarte 68 bei betriebsbereitem Gerät.

Letztlich sei noch darauf hingewiesen, dass die am Antennnengehäuse 3 ausgebildeten Achselemente 25, 26 auch nach außen weisend angeformt sein können, wenn das Grundgehäuse 2 in geeigneter Weise ausgebildet ist. Durch eine wenigstens teilweise doppelwandige Ausbildung der Seitenwände des Grundgehäuses 2 ist auch eine verdeckte Anordnung der in diesem Falle außenliegenden Bunde 23, 24 möglich.

## Patentansprüche

1. Gerät zur automatischen Ermittlung von
Straßenbenutzungsgebühren mit wenigstens einem Chipkartenaggregat, einem GPS-Empfänger, einem eine digitale Straßenkarte sowie Straßenabschnitten zugeordnete Tarifdaten enthaltenden Speicher, einem Rechner und einem der Kommunikation mit im wesentlichen ortsfesten Baken dienenden DSRC-Modul, sowie einem Gehäuse
**dadurch gekennzeichnet,**
**dass** das Gehäuse aus zwei Teilgehäuse besteht, wobei ein dem DSRC-Modul zugeordnetes Antennengehäuse (3) gelenkig mit einem die übrigen Funktionsbaugruppen tragenden Grundgehäuse (2) verbunden ist derart, dass die Schwenkachse in der Führungsebene des Chipkartenaggregates oder mit nur geringem Abstand parallel zu dieser angeordnet ist,
**dass** dem Grundgehäuse (2) Mittel zur Befestigung des Gerätes am Einbauort zugeordnet sind, wobei das Gerät (1) für die Montage auf einem Armaturenbrett geeignete Teilgehäuse aufweist und
**dass** Mittel vorgesehen sind, welche ein gegenseitiges Arretieren von Grundgehäuse (2) und Antennengehäuse (3) in einer den Zinbaugegebenheiten entsprechenden Winkelstellung gestatten.

2. Gerät zur automatischen Ermittlung von Straßenbenutzungsgebühren nach Anspruch 1,
**dadurch gekennzeichnet,**
**dass** Grundgehäuse (2) und Antennengehäuse (3) jeweils wenigstens aus zwei Gehäusebauteilen zusammengefügt sind und
**dass** in den Seitenwänden der Gehäusebauteile des Grundgehäuses (2) einander zugeordnete Lagerschalen (31, 32 und 53, 54) und an den Seitenwänden der Gehäusebauteile des Antennengehäuses (3) sich zu jeweils einem Achselement (25, 26) ergänzende Achshälften angeformt sind.

3. Gerät nach Anspruch 2,
**dadurch gekennzeichnet,**
**dass** an den Achshälften sich zu einem Bund (23, 24) ergänzende Halbscheiben ausgebildet sind.

4. Gerät nach Anspruch 1,
**dadurch gekennzeichnet,**
**dass** das für die Aufnahme des DSRC-Moduls vorgesehene Antennengehäuse (3) mit einem zungenförmigen Anschlag (10) ausgerüstet ist.

5. Gerät nach Anspruch 2,
**dadurch gekennzeichnet,**
**dass** in wenigstens einer Seitenwand des Grundgehäuses (2) wenigstens eine zu den Lagerschalen (31, 32 und 53, 54) konzentrische Lochreihe (69, 70) ausgebildet ist und dass in dem für die Aufnahme des DSRC-Moduls vorgesehenen Antennengehäuse (3) wenigstens eine auf einem dem Radius der Lochreihe (69, 70) entsprechenden Kreisbogen liegende Durchgangsbohrung (19, 20 und 29, 30) angebracht ist.

6. Gerät nach Anspruch 1,
**dadurch gekennzeichnet,**
**dass** eine mit einem Bodenteil (4) und einem Deckelteil (6) des Grundgehäuses (2) verbindbare Frontblende (5) vorgesehen ist, wobei in der Frontblende (5) wenigstens ein der Beobachtung eines Displays dienendes Fenster (15) sowie eine dem Datenkartenaggregat zugeordnete Einstecköffnung (13) ausgebildet sind.

7. Gerät nach Anspruch 2,
**dadurch** gekenntzeichnet,
dass die Achshälften an dem für den DSRC-Modul vorgesehenen Antennengehäuse (3) nach außen weisend ausgebildet sind und
dass die Seitenwände des Grundgehäuses (2) wenigstens teilweise doppelwandig ausgebildet sind derart, dass die Bunde (23, 24) der Achselenente (25, 26) in die Zwischenräume der Seitenwände eingreifen.

## Claims

1. Appliance for automatically ascertaining road toll charges having at least one chip card unit, a GPS receiver, a memory containing a digital road map and tariff data associated with road sections, a computer and a DSRC module which is used for communication with essentially fixed beacons, and also a housing,
**characterized**
**in that** the housing comprises two housing parts, wherein an antenna housing (3) associated with the DSRC module is connected in articulated fashion to a basic housing (2), which carries the remainder of the functional assemblies, such that the pivot axis is arranged in the guide plane of the chip card unit or at just a short distance parallel thereto,
**in that** the basic housing (2) has associated means for securing the appliance at the installation location, wherein the appliance (1) has housing parts which are suitable for mounting on a dashboard, and
**in that** means are provided which permit reciprocal locking of the basic housing (2) and the antenna housing (3) in an angular position which corresponds to the installation circumstances.

2. Appliance for automatically ascertaining road toll charges according to claim 1, **characterized**
**in that** the basic housing (2) and the antenna housing (3) are each assembled from at least two housing components, and
**in that** the side walls of the housing components of the basic housing (2) have mutually associated bearing shells (31, 32 and 53, 54) integrally moulded in them, and the side walls of the housing components of the antenna housing (3) have axle halves, which complement one another to form a respective axle element (25, 26), integrally moulded on them.

3. Appliance according to Claim 2,
**characterized**
**in that** the axle halves have half-discs produced on them which complement one another to form a collar (23, 24).

4. Appliance according to Claim 1,
**characterized**
**in that** the antenna housing (3) provided for holding the DSRC module is equipped with a tongue-like stop (10).

5. Appliance according to Claim 2,
**characterized**
**in that** at least one side wall of the basic housing (2) has at least one series of holes (69, 70) produced in it which is concentric with respect to the bearing shells (31, 32 and 53, 54), and in that the antenna housing (3) provided for holding the DSRC module has at least one through-hole (19, 20 and 29, 30) made in it which is situated on an arc which corresponds to the radius of the series of holes (69, 70).

6. Appliance according to Claim 1,
**characterized**
**in that** a front panel (5) is provided which can be connected to a base part (4) and to a cover part (6) of the basic housing (2), wherein the front panel (5) has at least one window (15), used for observing a display, and an insertion opening (13), associated with the data card unit, produced in it.

7. Appliance according to Claim 2,
**characterized**
**in that** the axle halves are produced in outwardly pointing fashion on the antenna housing (3) provided for the DSRC module, and
**in that** the side walls of the basic housing (2) are produced in at least partially double-walled fashion such that the collars (23, 24) of the axle elements (25, 26) engage in the interspaces between the side walls.

## Revendications

1. Appareil de détermination automatique de droits de péage routier, comprenant au moins un ensemble de cartes à puce, un récepteur GPS, une mémoire contenant une carte routière numérique, ainsi que des données de tarif affectées à des tronçons routiers, un ordinateur et un module DSRC servant à la communication avec des balises sensiblement à poste fixe, ainsi qu'un boîtier,
**caractérisé**
**en ce que** le boîtier est constitué de deux sous-boîtiers, un boîtier (3) d'antenne, associé au module DSRC, étant articulé à un boîtier (2) de base portant les autres modules fonctionnels, de manière à ce que l'axe de pivotement soit disposé dans le plan de guidage de l'ensemble de cartes à puce ou soit parallèle à celui-ci en en étant à une distance seulement petite,
**en ce que** des moyens de fixation de l'appareil à l'endroit où il est monté sont associés au boîtier (2) de base, l'appareil (1) comportant des sous-boîtiers appropriés au montage sur une planche d'armature et
**en ce qu'**il est prévu des moyens qui autorisent un blocage mutuel du boîtier (2) de base et du boîtier (3) d'antenne en une position angulaire correspondant aux conditions de montage.

2. Appareil de détermination automatique de droits de péage routier suivant la revendication 1,
**caractérisé**
**en ce que** le boîtier (2) de base et le boîtier (3) d'antenne sont composés respectivement d'au moins deux composants de boîtier
**en ce que** dans les parois latérales des composants du boîtier (2) de base sont formées des coquilles (31, 32 et 53, 54) de coussinet, associées les unes aux autres, et sur les parois latérales des composants du boîtier (3) d'antenne sont formées des moitiés d'axe complétant respectivement un élément (25, 26) d'axe.

3. Appareil suivant la revendication 2,
**caractérisé en ce que**
des moitiés de collerette se complétant en un collet (23, 24) sont formées sur les moitiés d'axe.

4. Appareil suivant la revendication 1,
**caractérisé en ce que**
le boîtier (3) d'antenne prévu pour la réception du module DSRC est équipé d'une butée (10) en forme de languette.

5. Appareil suivant la revendication 2,
**caractérisé en ce que**, dans au moins une paroi latérale du boîtier (2) de base, est ménagée au moins une rangée (69, 70) de trous concentriques aux coussinets (31, 32 et 53, 54) de support et **en ce que**, dans le boîtier (3) d'antenne prévu dans la réception du module DSRC, est ménagé un perçage (19, 20 et 29, 30) se trouvant sur un arc de cercle correspondant au rayon de la rangée (69, 70) de trous.

6. Appareil suivant la revendication 1,
**caractérisé en ce qu'**il est prévu un écran (5) avant pouvant être relié à une partie (4) de fond et à une partie (6) de couvercle du boîtier (2) de base, au moins un hublot (15) servant à l'observation d'un affichage, ainsi qu'une ouverture (13) d'enfichage associée à l'ensemble de cartes de donnée étant formés dans l'écran (5) avant.

7. Appareil suivant la revendication 2,
**caractérisé en ce que** les moitiés d'axe sont tournées vers l'extérieur sur le boîtier (3) d'antenne prévu pour le module DSRC et
**en ce que** les parois latérales du boîtier (2) de base sont constituées au moins en partie à paroi double de manière à ce que les collets (23, 24) des éléments (25, 26) d'axe pénètrent dans les intervalles entre les parois latérales.
